# EUROPEAN PATENT APPLICATION

(11) **EP 4 738 498 A1**
(43) Date of publication of application: **06.05.2026**
(21) Application number: 25198163.5
(22) Date of filing: 26.08.2025
(51) Int. Cl.: H01M 10/04, H01M 10/0587

(54) **ELECTRODE ASSEMBLY AND SECONDARY BATTERY INCLUDING THE SAME**

(30) Priority: 05.11.2024 KR 20240154845
(71) Applicant: SAMSUNG SDI CO., LTD., Yongin-si, Gyeonggi-do 17084 (KR)
(72) Inventor: LIM, Byounghwi, 17084 Yongin-Si, Gyeonggi-do (KR); CHO, Hyunho, 17084 Yongin-Si, Gyeonggi-do (KR); BOO, Soongji, 17084 Yongin-Si, Gyeonggi-do (KR)
(74) Representative: Bardehle Pagenberg Partnerschaft mbB Patentanwälte Rechtsanwälte

(57) **Abstract**

An electrode assembly includes a first electrode including a first substrate and a first composite part on the first substrate, a second electrode including a second substrate and a second composite part on the second substrate, a first separator between the first electrode and the second electrode, and a through hole in a winding core formed by winding of the first electrode, the second electrode, and the first separator, wherein the second substrate extends in a longitudinal direction of the second electrode, the second substrate including a winding direction non-coated part exposed from the second composite part, and wherein at least a part of the winding direction non-coated part is at a periphery of the through hole.

## Description

### BACKGROUND

### 1. Field

Embodiments include an electrode assembly, a secondary battery including the same, and a method for manufacturing the same.

### 2. Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smartphones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for the enhancement of understanding of the background of the present disclosure, and therefore, it may contain information that does not constitute related (or prior) art.

### SUMMARY

According to the present invention, an electrode assembly, a secondary battery including the same, and a method for manufacturing the same as claimed in claims 1, 12, and 14, respectively, are provided. Preferred embodiments of the invention are described in the dependent claims.

Embodiments include an electrode assembly, including a first electrode including a first substrate and a first composite part on the first substrate, a second electrode including a second substrate and a second composite part on the second substrate, a first separator between the first electrode and the second electrode, and a through hole in a winding core formed by winding the first electrode, the second electrode, and the first separator, wherein the second substrate extends in a longitudinal direction of the second electrode, the second substrate including a winding direction non-coated part exposed from the second composite part, and wherein at least a part of the winding direction non-coated part is at a periphery of the through hole.

The winding direction non-coated part and the first separator may be stacked at the periphery of the through hole in a diameter direction.

The first electrode may be on an outer surface of the first separator, and the second electrode may be on an inner surface of the first separator.

The electrode assembly may further include a second separator between the first electrode and the second electrode, wherein the second separator is on an outer surface of the first electrode.

The winding direction non-coated part, the first separator, and the second separator may be stacked at the periphery of the through hole in a diameter direction.

At least a part of the second separator may be positioned on an outer surface of the electrode assembly.

A winding leading end of the first separator may contact the second separator, or a winding leading end of the second separator may contact the first separator.

A winding leading end of the winding direction non-coated part may contact the first separator, or a winding leading end of the first separator may contact the winding direction non-coated part.

The first separator and the winding direction non-coated part may be between an inner surface of the second electrode and an outer surface of the first electrode.

The second separator, the first separator, and the winding direction non-coated part may be between an inner surface of the second electrode and the outer surface of the first electrode, and the second separator may be in a double-layer structure.

A winding leading end of the first separator, a winding leading end of the second separator, and a winding leading end of the winding direction non-coated part may be between the outer surface of the first electrode and an inner surface of the second electrode.

Embodiments include a secondary battery, including an electrode assembly according to any of the embodiments disclosed herein and a case configured to accommodate the electrode assembly.

The winding direction non-coated part and the separator may be stacked at the periphery of the through hole in a diameter direction.

The secondary battery may further include a lead tab connected to the winding direction non-coated part at the periphery of the through hole.

The secondary battery may further include an inserted current collector including a flat portion on the electrode assembly, and a protrusion that protrudes from the flat portion and is inserted into the through hole, wherein the protrusion of the inserted current collector may be electrically connected to the second electrode by contacting the winding direction non-coated part.

A height of the protrusion may be greater than half of a height of the electrode assembly, and smaller than the height of the electrode assembly.

The case may include an insertion part having an inwardly bent portion of one surface of the case to be inserted into the through hole, and the insertion part of the case may be electrically connected to the second electrode by contacting the winding direction non-coated part.

A height of the insertion part may be greater than half of a height of the electrode assembly, and smaller than the height of the electrode assembly.

Embodiments include a method for manufacturing an electrode assembly, the method including preparing a first electrode including a first substrate and a first composite part positioned on the first substrate, preparing a second electrode including a second substrate and a second composite part positioned on the second substrate, disposing a separator between the first electrode and the second electrode, and winding the first electrode, the second electrode, and the separator, wherein the second substrate extends in a longitudinal direction of the second electrode, the second substrate including a winding direction non-coated part exposed from the second composite part, and wherein a winding leading end of the winding direction non-coated part contacts the separator, or a winding leading end of the separator contacts the winding direction non-coated part.

The method may further include inserting an insertion bar into a through hole positioned in a winding core of the electrode assembly.

However, aspects and features of the present disclosure are not limited to those described above, and other aspects and features not mentioned will be clearly understood by a person skilled in the art from the detailed description, described below.

### BRIEF DESCRIPTION OF DRAWINGS

Features will become apparent to those of ordinary skill in the art by describing in detail exemplary embodiments with reference to the attached drawings, in which:
FIG. 1 is a cross-sectional view illustrating an example of a secondary battery according to embodiments of the present disclosure;
FIG. 2 is a view illustrating an example of winding a first electrode, a second electrode, a first separator, and a second separator according to embodiments of the present disclosure;
FIG. 3 is a view illustrating an example where a first electrode, a second electrode, a first separator, and a second separator are wound according to embodiments of the present disclosure;
FIG. 4 is an enlarged view illustrating an example of an electrode assembly according to embodiments of the present disclosure;
FIG. 5 is a view illustrating a part of an example of an electrode assembly according to embodiments of the present disclosure;
FIG. 6 is a view illustrating before a through hole of an electrode assembly is formed according to embodiments of the present disclosure;
FIG. 7 is a view illustrating that a through hole of an electrode assembly is formed according to embodiments of the present disclosure;
FIG. 8 is a cross-sectional view illustrating an example of a secondary battery including an inserted current collector according to embodiments of the present disclosure;
FIG. 9 is a cross-sectional view illustrating an example of a secondary battery including a case according to embodiments of the present disclosure; and
FIG. 10 is a flowchart illustrating an example of a manufacturing method of an electrode assembly according to embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. **In** addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her embodiments in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. **In** addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

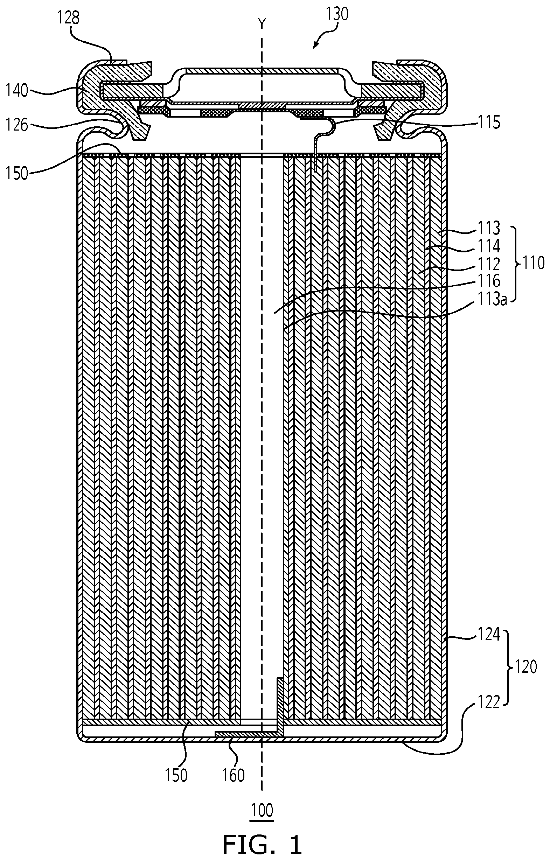

FIG. 1 is a cross-sectional view illustrating an example of a secondary battery 100 according to embodiments of the present disclosure. As shown in FIG. 1, the secondary battery 100 may include an electrode assembly 110, a case 120 for accommodating the electrode assembly 110 and an electrolyte, a cap assembly 130 coupled to an opening of the case 120 to seal the case 120, and an insulating plate 150 disposed between the electrode assembly 110, the cap assembly 130 and/or a bottom 122 of the case 120 within the case 120.

The electrode assembly 110 may include a first electrode 112, a second electrode 113, and a separator 114. The separator 114 may be disposed between the first electrode 112 and the second electrode 113. The electrode assembly 110 may be formed by winding the first electrode 112, the second electrode 113, and the separator 114 with respect to a winding axis (Y). Additionally, the electrode assembly 110 may include a through hole 116 disposed in a winding core.

The first electrode 112 may include a first substrate and a first composite part disposed on the first substrate. A first lead tab 115 may outwardly extend from a first non-coated part of the first substrate, in which the first composite part is not provided. The first lead tab 115 may be electrically connected to the cap assembly 130.

The second electrode 113 may include a second substrate and a second composite part positioned on the second substrate. A second lead tab 160 may outwardly extend from a second non-coated part of the second substrate, in which the second composite part is not provided. In other embodiments, the second lead tab 160 may be connected or coupled to the second non-coated part. The second lead tab 160 may be electrically connected to the case 120. Referring to FIG. 1, the first lead tab 115 and the second lead tab 160 may extend in opposite directions, but the first lead tab 115 and the second lead tab 160 may extend in the same direction.

The first electrode 112 may function as a positive electrode. In this case, the first substrate may be formed of, for example, aluminum foil, and the first composite part may include, for example, a transition metal oxide. The second electrode 113 may function as a negative electrode. In this case, the second substrate may be formed of, for example, copper foil or nickel foil, and the second composite part may include, for example, graphite.

The separator 114 may allow the movement of lithium ions and prevent short circuits between the first electrode 112 and the second electrode 113. The separator 114 may be formed of, for example, a polyethylene film, a polypropylene film, a polyethylene-polypropylene film, etc.

According to embodiments, the second substrate may extend in a longitudinal direction of the second electrode 113 and include a winding direction non-coated part 113a exposed from the second composite part. The winding direction non-coated part 113a may be a non-coated part of a substrate, in which a composite part is not provided, and positioned in an area where the winding of the substrate begins. With respect to the winding direction of the substrate, a winding direction non-coated part may be formed in an area where the winding of the substrate begins, and then a composite part may be formed adjacent to the winding direction non-coated part. An outermost end of the area where the winding of the substrate begins may be referred to as a winding leading end. For example, according to embodiments of the present disclosure, "winding leading end" may be referred to as an end with respect to the winding direction.

At least a part of the winding direction non-coated part 113a may be positioned at the periphery of the through hole 116. For example, the electrode assembly 110 may be formed by winding the first electrode 112, the second electrode 113, and the separator 114. The winding leading end of the electrode assembly 110 may include a winding leading end of the winding direction non-coated part 113a.

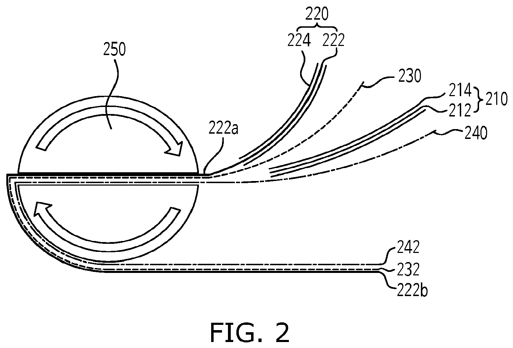

The electrode assembly 110 may be formed by disposing and winding the winding leading end of the first electrode 112, the second electrode 113 and the separator 114 in the area where the winding begins. At least a part of the winding direction non-coated part 113a may be positioned at the periphery of the through hole 116. The structure where the winding direction non-coated part 113a is positioned at the periphery of the through hole 116 will be described in detail with reference to FIG. 2 to FIG. 5.

According to embodiments, the second lead tab 160 may be connected to the inner circumferential surface of the electrode assembly 110. The winding direction non-coated part 113a of the second substrate may be positioned at the periphery of the through hole 116 of the electrode assembly 110. Accordingly, the second lead tab 160 may be connected to the winding direction non-coated part 113a, and the second lead tab 160 may be electrically connected to the second electrode 113. The bottom 122 of the case 120 electrically connected to the second lead tab 160 may be electrically connected to the second electrode 113.

The case 120 may form the exterior shape of the secondary battery 100 with the cap assembly 130. The case 120 may include a side wall 124 in a cylindrical shape, and the bottom 122 connected to one side (e.g., bottom end in the orientation shown) of the side wall 124. A beading part 126 that is inwardly deformed may be formed on the side wall 124, and a crimping part 128 that is inwardly bent may be formed at an opening side end of the side wall 124.

The beading part 126 may suppress the movement of the electrode assembly 110 inside the case 120, and easily ensure the mounting of a gasket 140 and the cap assembly 130. The crimping part 128 may pressurize the edge of the cap assembly 130 through the gasket 140 to firmly fix the cap assembly 130. For example, the case 120 may be formed of nickel-plated iron.

The insulating plate 150 may be positioned to contact the electrode assembly 110 under the beading part 126, and a tab opening for withdrawing the first lead tab 115 may be provided on the insulating plate 150. The cap assembly 130 electrically connected to the first electrode 112 by the first lead tab 115 may face the electrode assembly 110 with the insulating plate 150 interposed therebetween, and maintain the insulation from the electrode assembly 110 by the insulating plate 150.

The insulating plate 150 may be positioned to contact the electrode assembly 110 on the bottom 122 of the case 120, and a tab opening for withdrawing the second lead tab 160 may be provided on the insulating plate 150. The bottom 122 electrically connected to the second electrode 113 by the second lead tab 160 may face the electrode assembly 110 with the insulating plate 150 interposed therebetween, and maintain the insulation from the electrode assembly 110 by the insulating plate 150.

FIG. 2 is a view illustrating an example of winding a first electrode 210, a second electrode 220, a first separator 230 and a second separator 240 according to embodiments of the present disclosure. The electrode assembly may be formed by winding the first electrode 210, the second electrode 220, the first separator 230 and the second separator 240. The first electrode 210 may include a first substrate 212 and a first composite part 214 disposed on the first substrate 212. The second electrode 220 may include a second substrate 222 and a second composite part 224 disposed on the second substrate 222. The first separator 230 may be disposed between the first electrode 210 and the second electrode 220. The second separator 240 may be positioned on the outer surface of the first electrode 210. For example, the second separator 240 may be positioned on the other surface facing one surface of the first electrode 210 where the first separator 230 is disposed. The second separator 240 may be wound with the first electrode 210 and the second electrode 220 to be disposed between the first electrode 210 and the second electrode 220.

According to embodiments, the first electrode 210, the second electrode 220, the first separator 230 and the second separator 240 may be inserted into a winding device 250 to be wound. Referring to FIG. 2, the winding leading end of the first separator 230 and the second separator 240 may be inserted first. A part of the second substrate 222 of the second electrode 220 disposed on the first separator 230 may be inserted into the winding device 250 with the first separator 230 and the second separator 240. Specifically, a winding direction non-coated part 222a of the second substrate 222 may be inserted into the winding device 250 with the first separator 230 and the second separator 240. The winding device 250 may rotate with the first separator 230, the second separator 240 and the winding direction non-coated part 222a being inserted. For example, the winding device 250 may rotate clockwise, but it may vary. After the winding device 250 rotates at a predetermined angle, the first electrode 210 may be inserted between the first separator 230 and the second separator 240 for rotation. As the winding device 250 rotates, an electrode assembly may be formed by winding the first electrode 210, the second electrode 220, the first separator 230 and the second separator 240. In this case, the first electrode 210 may be a positive electrode, and the second electrode 220 may be a negative electrode. Alternatively, the first electrode 210 may be a positive electrode, and the second electrode 220 may be a positive electrode.

The winding leading end described below may indicate a leading end located in the area where the winding begins. For example, a winding leading end 232 of the first separator may be a leading end of the first separator 230 inserted into the winding device 250. A winding leading end 242 of the second separator may be a leading end of the second separator 240 inserted into the winding device 250. A winding leading end 222b of the winding direction non-coated part of the second substrate 222 may be the leading end of the winding direction non-coated part 222a inserted into the winding device 250. The winding leading end of the electrode assembly may include at least one of the winding leading end 232 of the first separator, the winding leading end 242 of the second separator, or the winding direction non-coated part 222a. For example, the winding leading end of the electrode assembly may correspond to a configuration that farthest protrudes toward the winding direction among the winding leading end 232 of the first separator, the winding leading end 242 of the second separator or the winding direction non-coated part 222a.

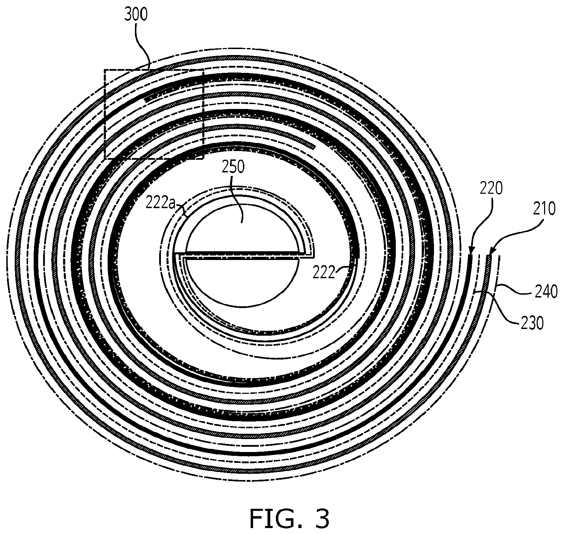

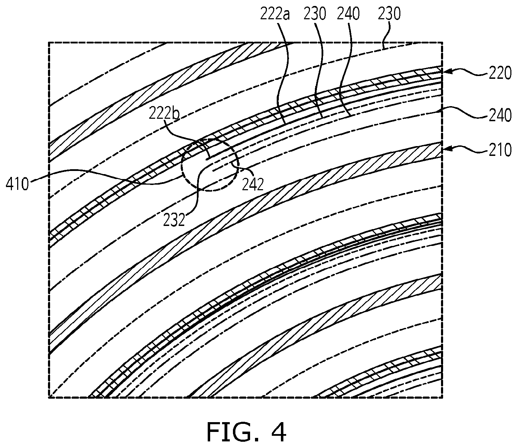

As described above, a portion of the first separator 230, a portion of the second separator 240, and at least a portion of the winding direction non-coated part 222a may be disposed in the winding core of the electrode assembly. The configuration of winding the first electrode 210, the second electrode 220, the first separator 230, and the second separator 240 may be detailed with reference to FIG. 3 and FIG. 4.

FIG. 3 is a view illustrating an example where the first electrode 210, the second electrode 220, the first separator 230, and the second separator 240 are wound. The winding leading end of the electrode assembly may be inserted into the winding device 250, and as the winding device 250 rotates, the first electrode 210, the second electrode 220, the first separator 230, and the second separator 240 may be wound. A part of the first separator 230, a part of the second separator 240, and at least part of the winding direction non-coated part 222a extended from the second substrate 222 may be positioned in the winding core.

According to the present disclosure, the electrode assembly may encompass the laminate structure formed by winding an electrode and a separator. The laminate structure of the electrode assembly may vary depending on the positions. For example, only a part of the separator and/or the substrate may be positioned in the winding core, and other parts of the separator and/or the substrate may be wound in areas outside the winding core.

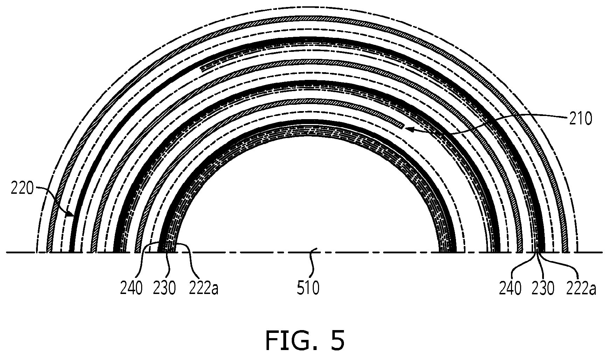

According to embodiments, the winding device 250 may be removed, and an insertion bar may be inserted into the area formed by the winding direction non-coated part 222a. For example, the insertion bar may be inserted into the area surrounded by the winding direction non-coated part 222a. Referring to FIG. 2, the winding device 250 may be removed, and the insertion bar may be inserted. As the insertion bar moves toward the diameter direction, a part of the first separator 230, a part of the second separator 240, and a part of the winding direction non-coated part 222a may move along the diameter direction (e.g., may move along inside the diameter of the winding device 250). As the insertion bar moves along the diameter direction, a through hole may be formed in the winding core of the electrode assembly. At least a part of the winding direction non-coated part 222a may be positioned at the periphery of the through hole. The feature where the through hole is formed in the electrode assembly will be detailed with reference to FIG. 5 to FIG. 7.

According to embodiments, the first electrode 210 may be positioned on the outer surface of the first separator 230. The second electrode 220 may be positioned on the inner surface of the first separator 230. At least a part of the second separator 240 may be positioned on the outer surface of the electrode assembly (e.g., the outer surface of first electrode 210).

Referring to an area 300 of the electrode assembly in FIG. 3, according to embodiments, the winding leading end of the electrode assembly may be disposed between the second separator 240 and the second electrode 220 (refer to the enlarged view of FIG. 4). At least a part of the electrode assembly may include a structure where the second separator 240 is in a double-layered structure, and the first separator, the winding direction non-coated part 222a and the second electrode 220 are stacked in the diameter direction of the electrode assembly. The laminate structure of the electrode assembly will be detailed with reference to the partially enlarged view of the electrode assembly in FIG. 4.

FIG. 4 is a partially enlarged view illustrating an example of an electrode assembly according to embodiments of the present disclosure. FIG. 4 is an enlarged view illustrating an area 300 of the electrode assembly in FIG. 3.

According to embodiments, a winding leading end 410 of the electrode assembly may include at least one of the winding leading end 232 of the first separator, the winding leading end 242 of the second separator, and a winding leading end 222b of the winding direction non-coated part. Referring to FIG. 4, the winding leading end 232 of the first separator, the winding leading end 242 of the second separator, and the winding leading end 222b of the winding direction non-coated part may face one another. In this case, the winding leading end 410 of the electrode assembly may be formed of the winding leading end 232 of the first separator, the winding leading end 242 of the second separator, and the winding leading end 222b of the winding direction non-coated part. However, the winding leading end 410 of the electrode assembly may correspond to the configuration that protrudes the farthest in the winding direction among the winding leading end 232 of the first separator, the winding leading end 242 of the second separator, and the winding direction non-coated part 222a.

Referring to FIG. 4, the winding leading end 410 of the electrode assembly may be disposed between the outer surface of the first electrode 210 and the inner surface of the second electrode 220. Specifically, the winding leading end 232 of the first separator, the winding leading end 242 of the second separator, and the winding direction non-coated part 222a may be disposed between the outer surface of the first electrode 210 and the inner surface of the second electrode 220.

According to embodiments, the winding leading end 232 of the first separator may protrude further in the winding direction than the winding leading end 242 of the second separator. In this case, the winding leading end 242 of the second separator may contact the first separator 230. In other embodiments, the winding leading end 242 of the second separator 240 may protrude further in the winding direction than the winding leading end 232 of the first separator. In this case, the winding leading end 232 of the first separator may contact the second separator 240.

The winding leading end of the winding direction non-coated part 222a may protrude further in the winding direction than the winding leading end 232 of the first separator. In this case, the winding leading end 232 of the first separator may contact the winding direction non-coated part 222a. In other embodiments, the winding leading end 232 of the first separator may protrude further than the winding leading end of the winding direction non-coated part 222a. In this case, the winding leading end of the winding direction non-coated part 222a may contact the first separator 230.

According to embodiments, the second separator 240, the first separator 230, and the winding direction non-coated part 222a may be disposed between the inner surface of the second electrode 220 and the outer surface of the first electrode 210. The second separator 240 may be positioned in two (2) layers.

The outer surface of the winding direction non-coated part 222a may face the second electrode 220. The inner surface of the winding direction non-coated part 222a may face the first separator 230. According to embodiments, the winding leading end of the winding direction non-coated part 222a may protrude further in the winding direction than the winding leading end 232 of the first separator and/or the winding leading end 242 of the second separator. In this case, the winding leading end of the winding direction non-coated part 222a may be disposed between the second electrode 220 and the second separator 240. As a part of the second substrate, the winding direction non-coated part may contact the second electrode 220 or the first separator 230, and may not contact the first electrode 210, so that the short-circuit may not occur by the winding direction non-coated part 222a.

FIG. 5 is a view illustrating a part of an example of an electrode assembly according to embodiments of the present disclosure. According to embodiments, the winding device 250 may be removed from the electrode assembly in FIG. 2, and the insertion bar may be inserted into the space between (e.g., in the middle of) the winding direction non-coated part 222a. While the insertion bar moves in the diameter direction, the insertion bar may push a part of the first separator 230, a part of the second separator 240 and a part of the winding direction non-coated part 222a in the diameter direction to form a through hole 510. At least a part of the winding direction non-coated part 222a may be positioned at the periphery of the through hole 510.

According to embodiments, the electrode assembly may include the structure where the winding direction non-coated part, the first separator 230 and the second separator 240 are stacked in the diameter direction at the periphery of the through hole 510. Specifically, the electrode assembly may include the structure where the winding direction non-coated part 222a, the first separator 230, the second separator 240 in a double-layered structure, the first separator 230 and the winding direction non-coated part 222a are sequentially stacked at the periphery of the through hole 510 in the diameter direction.

As described above, a part of the second substrate may be positioned on the inner wall or at the periphery of the through hole. An electrically conductive configuration (e.g., an electrode tab having the same polarity as the second electrode 220) may be inserted through the through hole 510 to be connected to the second substrate (e.g., a winding direction non-coated part) to be electrically connected to the second electrode. The energy density of the secondary battery including the electrode assembly may increase by using the space of the through hole 510 of the electrode assembly without a separator electrode tab outside the electrode assembly. In addition, a structure may be arranged where a separator having a plurality of layers and a second electrode are stacked on the outer surface of the winding direction non-coated part at the periphery of the through hole 510, so that the winding direction non-coated part 222a disposed at the periphery of the through hole 510 may be stably electrically connected to other components (e.g., an electrode tab, a current collector, etc.)

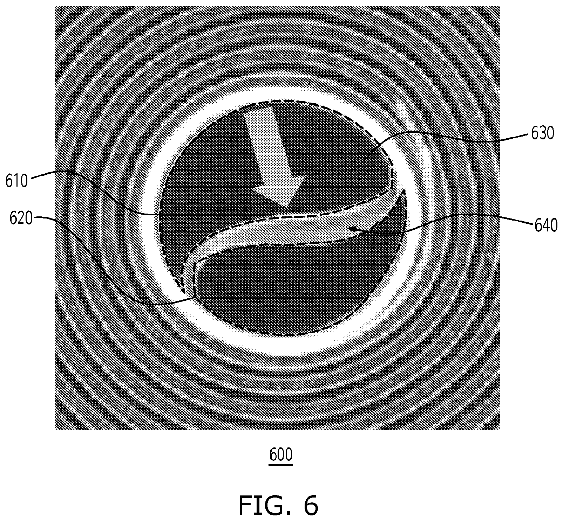

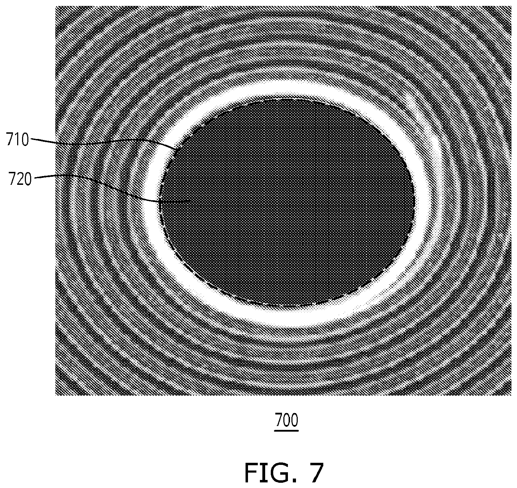

FIG. 6 is a view illustrating before a through hole of an electrode assembly is formed according to embodiments of the present disclosure. FIG. 7 is a view illustrating a through hole of an electrode assembly is formed according to embodiments of the present disclosure. FIG. 6 is a view illustrating an electrode assembly 600 formed by winding a first electrode (e.g., the first electrode 210 of FIG. 2), a second electrode (e.g., the second electrode 220 of FIG. 2), a first separator (e.g., the first separator 230 of FIG. 2), and a second separator (e.g., the second separator 240 of FIG. 2).

At least a part of a winding direction non-coated part 610 of the second substrate and a part of a second separator 620 may be positioned in the winding core of the electrode assembly. A portion of the winding direction non-coated part 610 and a portion of the second separator 620 may contact the winding core of the electrode assembly, and an interface 640 that passes through the center of the electrode assembly may be formed. For example, the interface 640 may be a partial area of the winding direction non-coated part 610 inserted into the center of the winding device 250, and the second separator 620. The interface 640 may further include a first separator between the winding direction non-coated part 610 and the second separator 620.

According to embodiments, an insertion bar may be inserted into a space 630 between the winding direction non-coated part. The insertion bar may move in the diameter direction of the electrode assembly. The interface 640 may be pushed out to the periphery of the through hole when the insertion bar moves. The interface 640 may be positioned at the periphery of the through hole of the electrode assembly.

Referring to FIG. 7, the insertion bar moves in the diameter direction (e.g., turns in the diameter direction), and a through hole 720 may be formed in the winding core of the electrode assembly. FIG. 7 illustrates the winding core of the electrode assembly as shown in FIG. 5. The through hole 720 may have a circular shape. As the interface is disposed at the periphery of the through hole of the electrode assembly, a winding direction non-coated part 710 may be positioned at the periphery of the through hole 720. The electrode assembly may include a structure where a winding direction non-coated part, a first separator, and a second separator are stacked in the diameter direction at the periphery of the through hole 720.

The rigidity of the winding core may be weak in the electrode assembly where only the separator is positioned at the periphery of the through hole. Therefore, when external impacts occur in the secondary battery including the electrode assembly, the electrode assembly may be easily deformed. However, the rigidity of the winding core of the electrode assembly may be relatively stronger because a portion of the second substrate is positioned at the periphery of the through hole 720 as the electrode assembly according to embodiments of the present disclosure. Therefore, although the secondary battery including the electrode assembly is subjected to external impacts, the electrode assembly may not be easily deformed.

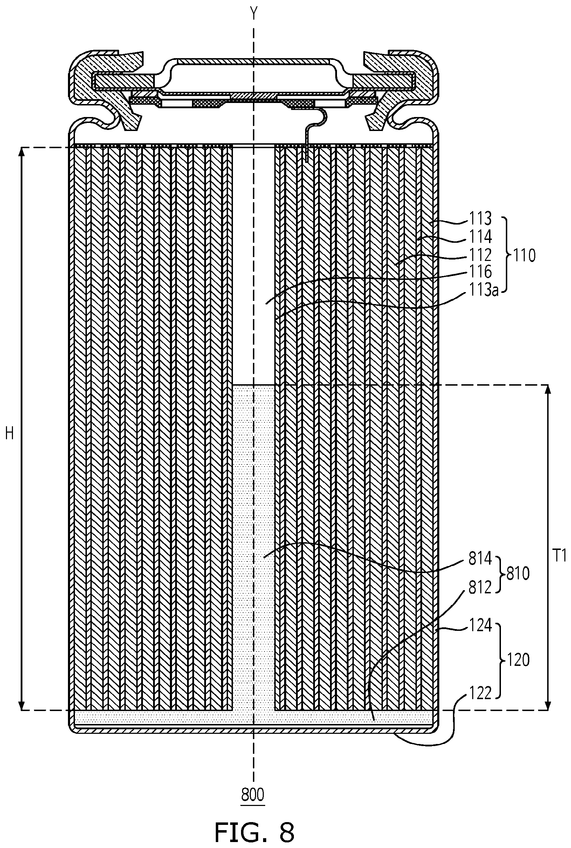

FIG. 8 is a cross-sectional view illustrating an example of a secondary battery 800 including an inserted current collector 810 according to embodiments of the present disclosure. The secondary battery 800 of FIG. 8 may include the same configurations as the other configurations than the second lead tab 160 and the insulating plate 150 of the secondary battery 100. Additionally, the secondary battery 800 of FIG. 8 may include the inserted current collector 810. The redundant description will be omitted in FIG. 8, and the description will focus on the inserted current collector 810.

According to embodiments, the inserted current collector 810 may have a plate shape (e.g., an upside down "T" shape in the orientation shown), and may include a flat portion 812 contacting the electrode assembly 110. The flat portion 812 may be disposed between the bottom 122 of the case 120 and the electrode assembly 110. The flat portion 812 may include an electrically conductive material, and may be electrically connected to a protrusion 814, and the bottom 122 of the case 120 contacting the flat portion 812. At least a part of the flat portion 812 may include an insulating material. For example, the area of the flat portion 812, which contacts the electrode assembly 110, may include an insulating material. The inserted current collector 810 may include an insulating layer disposed between the flat portion 812 and the electrode assembly 110. Therefore, the short-circuit may not occur between the flat portion 812 and the electrode assembly 110.

According to embodiments, the inserted current collector 810 may protrude from the flat portion 812, and include the protrusion 814 inserted into the through hole 116 of the electrode assembly 110. The protrusion 814 may contact a winding direction non-coated part 113a disposed at the periphery of the through hole 116. The protrusion 814 may include an electrically conductive material, and may be electrically connected to the winding direction non-coated part 113a. Accordingly, the protrusion 814 may be electrically connected to the second electrode 113.

According to embodiments, a height T1 of the protrusion may be greater than 1/2 of a height H of the electrode assembly, and smaller than the height H of the electrode assembly. Therefore, the protrusion 814 may be sufficiently electrically connected to the second substrate including the winding direction non-coated part 113a. In addition, the protrusion 814 may prevent the electrode assembly 110 from being exposed to the outside, thereby preventing the short-circuits that occur from the other components inside the secondary battery 800.

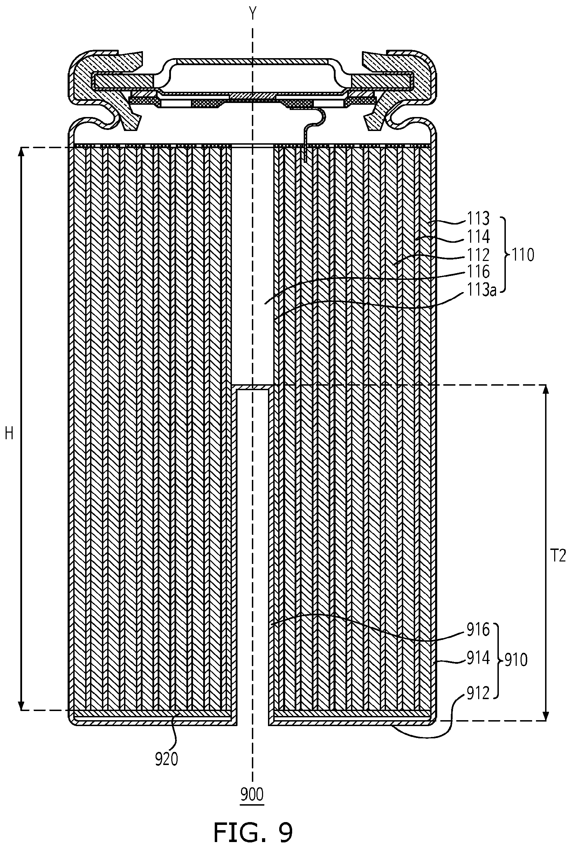

FIG. 9 is a cross-sectional view illustrating an example of a secondary battery 900 including a case 910 according to embodiments of the present disclosure. The secondary battery 900 of FIG. 9 may include the same configuration as the other configurations than (e.g., other than) the second lead tab 160, the insulating plate 150, and the bottom 912 of the case 910 of the secondary battery 100 of FIG. 1. According to embodiments, the case 910 of the secondary battery 900 may include a bottom 912, a side wall 914 and an insertion part 916. The secondary battery 900 may include an insulating plate 920. In FIG. 9, the redundant description will be omitted, and the description will focus on the insertion part 916 and an insulating plate 920.

The case 910 may include a side wall 914 in a cylindrical shape and a bottom 912 connected to one side (e.g., one end) of the side wall 914. According to embodiments, the case 910 may include the insertion part 916 formed by bending a portion of one surface of the case 910 toward the inside of the case 910 to be inserted into the through hole 116. The insertion part 916 may contact the winding direction non-coated part 113a disposed at the periphery of the through hole 116. The insertion part 916 may be electrically connected to the winding direction non-coated part 113a to be electrically connected to the second electrode 113. In addition, the bottom 912 connected to the insertion part 916 may be electrically connected to the second electrode 113.

According to embodiments, the insulating plate 920 may be disposed between the electrode assembly 110 and the bottom 912 of the case 910. The insulating plate 920 may include an insertion opening through which the insertion part 916 passes. The bottom 912 electrically connected to the second electrode 113 may face the electrode assembly 110 with the insulating plate 920 interposed therebetween and maintain the insulation from the electrode assembly 110 by the insulating plate 920.

According to embodiments, a height T2 of the insertion part may be greater than 1/2 (e.g., "half") of a height H of the electrode assembly and smaller than the height H of the electrode assembly. The insertion part 916 may be sufficiently electrically connected to the second substrate including the winding direction non-coated part 113a. In addition, the insertion part 916 may prevent the electrode assembly 110 from being exposed to the outside, thereby preventing the short-circuits caused by (e.g., potentially caused by) other components inside the secondary battery 900.

As described above, without an electrode tab connected to the second electrode 113 and a separate space for forming the electrode tab, the second electrode 113 may be electrically connected to the bottom 912 by using an inserted current collector (e.g., the inserted current collector 810 (in FIG. 8) and/or the insertion part 916 of FIG. 9). Therefore, the energy density of the secondary battery 900 may increase. In addition, the internal resistance of the secondary battery 900 may be reduced without using the electrode tab connected to the second electrode 113, and the output of the secondary battery 900 may increase.

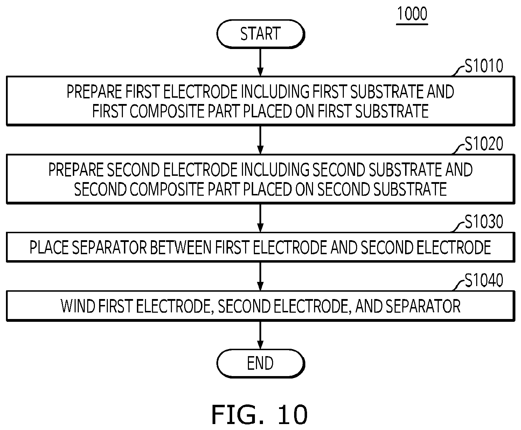

FIG. 10 is a flowchart illustrating an example of a manufacturing method 1000 of an electrode assembly according to embodiments of the present disclosure. The manufacturing method 1000 of the electrode assembly may be performed by a manufacturing device of an electrode assembly. The manufacturing device of the electrode assembly may include a winding device (e.g., the winding device 250 of FIG. 2) and an insertion bar.

An electrode assembly manufacturing method 1000 may be initiated by preparing a first substrate and a first electrode including a first composite part disposed on the first substrate in step S1010.

An electrode assembly manufacturing device may prepare a second substrate and a second electrode including a second composite part disposed on the second substrate in step S1020. The second substrate may extend in a longitudinal direction of the second electrode and include a winding direction non-coated part exposed from the second composite part.

The electrode assembly manufacturing device may include (e.g., insert) a first separator between the first electrode and the second electrode in step S1030. The electrode assembly manufacturing device may further include a second separator. The second separator may be disposed on the outer surface of the first electrode.

The electrode assembly manufacturing device may wind a first electrode, a second electrode and a first separator in step S 1040. Additionally, the electrode assembly manufacturing device may wind a second separator. The winding leading end of the winding direction non-coated part may contact the first separator, or the winding leading end of the first separator may contact the winding direction non-coated part.

According to embodiments, the electrode assembly manufacturing device may insert an insertion bar into a space between the winding direction non-coated part. The electrode assembly manufacturing device may place at least a part of the winding direction non-coated part at the periphery of the through hole disposed in the winding core of the electrode assembly by moving the insertion bar.

According to embodiments, in the electrode assembly, the winding direction non-coated part and the first separator may be stacked at the periphery of the through hole in the diameter direction.

In the electrode assembly, the first electrode may be positioned on the outer surface of the first separator, and the second electrode may be positioned on the inner surface of the first separator.

In the electrode assembly, the winding direction non-coated part, the first separator, and the second separator may be stacked at the periphery of the through hole in the diameter direction.

At least a part of the second separator may be positioned on the outer surface of the electrode assembly.

The winding leading end of the first separator may contact the second separator, and the winding leading end of the second separator may contact the first separator. In addition, the winding leading end of the winding direction non-coated part may contact the first separator, and the winding leading end of the first separator may contact the winding direction non-coated part.

In the electrode assembly, the first separator and the winding direction non-coated part may be disposed between the inner surface of the second electrode and the outer surface of the first electrode.

In the electrode assembly, the second separator, the first separator, and the winding direction non-coated part may be disposed between the inner surface of the second electrode and the outer surface of the first electrode, and the second separator may be positioned in two layers. Additionally or in other embodiments, in the electrode assembly, the winding leading end of the first separator, the winding leading end of the second separator, and the winding leading end of the winding direction non-coated part may be disposed between the outer surface of the first electrode and the inner surface of the second electrode.

The secondary battery may include an electrode assembly and a case for accommodating the electrode assembly. The secondary battery may further include a lead tab connected to the winding direction non-coated part positioned at the periphery of the through hole.

The secondary battery may further include an inserted current collector including a flat portion disposed on the electrode assembly and a protrusion that protrudes from the flat portion and inserted into the through hole, and the protrusion of the inserted current collector may contact the winding direction non-coated part to be electrically connected to the second electrode. For example, the height of the protrusion of the secondary battery may be greater than 1/2 of the height of the electrode assembly, and smaller than the height of the electrode assembly.

The case may include an insertion part formed by bending a portion of one surface of the case toward the inside to be inserted into the through hole and the insertion part of the case may contact the winding direction non-coated part to be electrically connected to the second electrode. For example, the height of the insertion part may be greater than 1/2 of the height of the electrode assembly and smaller than the height of the electrode assembly.

The flow chart of FIG. 10 and the above description are merely exemplary, and the scope of the present disclosure is not limited to the flow chart of FIG. 10 and the above description. For example, one or more steps in the flow chart and the above description may be added/changed/deleted, the orders of one or more steps may be changed, and one or more steps may be performed simultaneously.

An electrode assembly of a secondary battery may be formed by winding a positive electrode and a negative electrode. In general, the area of the winding core of the electrode assembly is formed of a separator, so the rigidity is weak. Therefore, the electrode assembly may be deformed due to external impacts of a secondary battery. In addition, an electrode tab may be formed on the outer side of the electrode assembly. However, a problem lies in that the energy density of a secondary battery becomes low due to the electrode tab and the space required for the electrode tab.

According to various embodiments of the present disclosure, a winding direction non-coated part may be a part of a second substrate and in contact with a second electrode and/or a first separator, and not in contact with a fist electrode. Therefore, short-circuits due to the winding direction non-coated part may not occur.

According to various embodiments of the present disclosure, an electrode assembly may not include a separate electrode tab on the outer side, and may use a through hole space of the electrode assembly, so that the energy density of the secondary battery including the electrode assembly may increase. In addition, a structure may be arranged by stacking a separator including a plurality of layers and a second electrode on the outer surface of the winding direction non-coated part at the periphery of the through hole. Therefore, the winding direction non-coated part, which is arranged at the periphery of the through hole, may be stably electrically connected to other components (e.g., an electrode tab, a current collector, etc.).

According to various embodiments of the present disclosure, a part of the second substrate may be disposed at the periphery of the through hole, so that the rigidity of the winding core of the electrode assembly may be relatively stronger. Therefore, the electrode assembly may not be easily deformed even though the secondary battery including the electrode assembly is subjected to external impacts.

According to various embodiments of the present disclosure, an electrode tab connected to a second electrode and a separate space for forming the electrode tab may not be provided, but the second electrode may be electrically connected to a bottom portion by using an inserted current collector and/or an insertion part. Therefore, the energy density of the secondary battery may increase.

According to various embodiments of the present disclosure, the internal resistance of the secondary battery may be reduced without using the electrode tab connected to the second electrode, thereby increasing the output of the secondary battery.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

Example embodiments have been disclosed herein, and although specific terms are employed, they are used and are to be interpreted in a generic and descriptive sense only and not for purpose of limitation. **In** some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

### [Description of Notations]

100: SECONDARY BATTERY
110: ELECTRODE ASSEMBLY
112: FIRST ELECTRODE
113: SECOND ELECTRODE
113a: WINDING DIRECTION NON-COATED PART
114: SEPARATOR
115: FIRST LEAD TAB
116: THROUGH HOLE
160: SECOND LEAD TAB
120: CASE
122: BOTTOM
124: SIDE WALL
126: BEADING PART
128: CRIMPING PART
130: CAP ASSEMBLY
140: GASKET
150: INSULATING PLATE

## Claims

1. An electrode assembly (110), comprising:
a first electrode (112, 210) comprising a first substrate (212) and a first composite part (214) on the first substrate (212);
a second electrode (113, 220) comprising a second substrate (222) and a second composite part (224) on the second substrate (222);
a first separator (230) between the first electrode (210) and the second electrode (220); and
a through hole (116, 510, 720) in a winding core formed by winding the first electrode (210), the second electrode (220), and the first separator (230),
wherein the second substrate (222) extends in a longitudinal direction of the second electrode (220), the second substrate (222) comprising a winding direction non-coated part (113a, 222a, 610, 710) exposed from the second composite part (224), and
wherein at least a part of the winding direction non-coated part (113a, 222a, 610, 710) is at a periphery of the through hole (116, 510, 720).

2. The electrode assembly (110) as claimed in claim 1, wherein the winding direction non-coated part (222a) and the first separator (230) are stacked at the periphery of the through hole (510) in a diameter direction.

3. The electrode assembly (110) as claimed in claim 1 or 2, wherein:
the first electrode (210) is on an outer surface of the first separator (230), and
the second electrode (220) is on an inner surface of the first separator (230).

4. The electrode assembly (110) as claimed in any of claims 1-3, further comprising a second separator (240) between the first electrode (210) and the second electrode (220), wherein the second separator (240) is on an outer surface of the first electrode (210).

5. The electrode assembly (110) as claimed in claim 4, wherein the winding direction non-coated part (222a), the first separator (230), and the second separator (240) are stacked at the periphery of the through hole (510) in a diameter direction.

6. The electrode assembly (110) as claimed in claim 4 or 5, wherein at least a part of the second separator (240) is positioned on an outer surface of the electrode assembly (110).

7. The electrode assembly (110) as claimed in any of claims 4-6, wherein:
a winding leading end (232) of the first separator (230) contacts the second separator (240), or
a winding leading end (242) of the second separator (240) contacts the first separator (230).

8. The electrode assembly (110) as claimed in any of claims 1-7, wherein:
a winding leading end (222b) of the winding direction non-coated part (222a) contacts the first separator (230), or
a winding leading end (232) of the first separator (230) contacts the winding direction non-coated part (222a).

9. The electrode assembly (110) as claimed in any of claims 1-8, wherein the first separator (230) and the winding direction non-coated part (222a) are between an inner surface of the second electrode (220) and an outer surface of the first electrode (210).

10. The electrode assembly (110) as claimed in any of claims 4-9, wherein:
the second separator (240), the first separator (230), and the winding direction non-coated part (222a) are between an inner surface of the second electrode (220) and the outer surface of the first electrode (210), and
the second separator (240) is in a double-layer structure.

11. The electrode assembly (110) as claimed in any of claims 4-10, wherein a winding leading end (232) of the first separator, a winding leading end (242) of the second separator, and a winding leading end (222b) of the winding direction non-coated part are between the outer surface of the first electrode (210) and an inner surface of the second electrode (220).

12. A secondary battery (100, 800, 900), comprising:
an electrode assembly (110) of any of claims 1-11: and
a case (120, 910) configured to accommodate the electrode assembly (110).

13. The secondary battery (100) as claimed in claim 12, wherein the winding direction non-coated part (113a) and the separator (114) are stacked at the periphery of the through hole (116) in a diameter direction,
preferably further comprising an inserted current collector (810) including a flat portion (812) on the electrode assembly (110), and a protrusion (814) that protrudes from the flat portion (812) and is inserted into the through hole (116),
particularly wherein the protrusion (814) of the inserted current collector (810) is electrically connected to the second electrode (113) by contacting the winding direction non-coated part (113a),
particularly wherein:
the case (910) comprises an insertion part (916) having an inwardly bent portion of one surface of the case (910) to be inserted into the through hole (116), and
the insertion part (916) of the case (910) is electrically connected to the second electrode (113) by contacting the winding direction non-coated part (113a).

14. A method (1000) for manufacturing an electrode assembly, the method comprising:
preparing (S 1010) a first electrode comprising a first substrate and a first composite part positioned on the first substrate;
preparing (S 1020) a second electrode comprising a second substrate and a second composite part positioned on the second substrate;
disposing (S1030) a separator between the first electrode and the second electrode; and
winding (S1040) the first electrode, the second electrode, and the separator,
wherein the second substrate extends in a longitudinal direction of the second electrode, the second substrate comprising a winding direction non-coated part exposed from the second composite part, and
wherein a winding leading end of the winding direction non-coated part contacts the separator, or a winding leading end of the separator contacts the winding direction non-coated part.

15. The method as claimed in claim 14, further comprising inserting an insertion bar into a through hole positioned in a winding core of the electrode assembly.
